# EUROPÄISCHE PATENTSCHRIFT

(11) **EP 3 390 200 B1**
(45) Veröffentlichungstag und Bekanntmachung des Hinweises auf die Patenterteilung: **17.06.2020**
(21) Anmeldenummer: 16826010.7
(22) Anmeldetag: 06.12.2016
(51) Int. Cl.: B62D 1/184, B62D 1/19

(54) **VERSTELLBARE LENKSÄULE FÜR KRAFTFAHRZEUGE MIT ENERGIEABSORPTIONSVORRICHTUNG**
ADJUSTABLE STEERING COLUMN FOR MOTOR VEHICLES, HAVING AN ENERGY ABSORPTION DEVICE
COLONNE DE DIRECTION RÉGLABLE POUR VÉHICULES AUTOMOBILES À DISPOSITIF D'ABSORPTION D'ÉNERGIE

(30) Priorität: 16.12.2015 DE 102015225488
(43) Veröffentlichungstag der Anmeldung: 24.10.2018
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); FORTE, Sebastian, 9493 Mauren (LI)
(74) Vertreter: thyssenkrupp Intellectual Property GmbH
(86) Internationale Anmeldenummer: PCT/EP2016/079900
(87) Internationale Veröffentlichungsnummer: WO 2017/102440

(56) Entgegenhaltungen:
- EP-A1- 2 259 957
- EP-A2- 1 464 560
- EP-A2- 1 940 670

## Beschreibung

Die Erfindung betrifft eine verstellbare Lenksäule für ein Kraftfahrzeug, mit einer Stelleinheit, in der eine Lenkspindel drehbar gelagert ist, wobei die Stelleinheit gegenüber einer karosseriefesten Halteeinheit in Achsrichtung der Lenkspindel verstellbar und mittels einer Klemmvorrichtung festklemmbar ist, so dass die Stelleinheit im Normalbetrieb des Fahrzeugs unverschieblich gegenüber der Halteeinheit fixiert ist, und mit einer zwischen der Stelleinheit und der Halteeinheit angeordneten Energieabsorptionsvorrichtung, wobei die Energieabsorptionsvorrichtung einen Zentralabschnitt aufweist, an dem mindestens ein Energieabsorber angeordnet ist, wobei der Energieabsorber mit der Stelleinheit gekoppelt ist, und dass der Zentralabschnitt mit mindestens einem Klemmabschnitt verbunden ist, der mittels der Klemmvorrichtung festklemmbar ist.

Solche Lenksäulen mit Energieabsorptionsvorrichtung haben die Aufgabe, die durch den Fahrer während eines Fahrzeugfrontalaufpralls in die Lenksäule eingetragene Energie kontrolliert zu absorbieren.

Aus der DE 20 2008 015 444 U1 ist eine Lenksäule mit einer Energieabsorptionsvorrichtung bekannt, bei der die Stelleinheit mittels eines Sperrhakens an der Halteeinheit ein- und auskoppelbar ist, um im ausgekoppelten Zustand die Längsverstellbarkeit der Stelleinheit gegenüber der Halteeinheit zu gewährleisten und im eingekoppelten Zustand das Energieabsorptionselement in den Kraftfluss einzukoppeln. Nachteil dieser Lösung ist der aufwändige Aufbau und die Tatsache, dass der Sperrhaken beim Einkoppeln manchmal nicht in Eingriff mit einer Formschlussausnehmung des Energieabsorptionselementes tritt und er im Crashfall zunächst ohne Energieabsorption verlagert werden muss, bis er in Eingriff mit einer Formschlussausnehmung tritt.

Aus der EP 1 940 670 A1 ist eine Lenksäule mit den eingangs genannten Merkmalen bekannt. Die Ankopplung des Energieabsorbers ist jedoch aufwendig. Dies gilt ebenfalls für die aus der EP 1 464 560 A2 bekannte Lenksäule.

Aufgabe der Erfindung ist es daher, eine Lenksäule anzugeben, welche eine verbesserte Energieabsorptionsvorrichtung mit einem einfachen und funktionssicheren Aufbau aufweist.

Die erfindungsgemäße Lösung dieser Aufgabe sieht vor, dass die Energieabsorptionsvorrichtung einen Zentralabschnitt aufweist, an dem mindestens ein Energieabsorber angeordnet ist, wobei der Energieabsorber mit der Stelleinheit gekoppelt ist, und dass der Zentralabschnitt mit mindestens einem Klemmabschnitt verbunden ist, der mittels der Klemmvorrichtung festklemmbar ist. Statt eines besonderen Einrastmechanismus wie beim Stand der Technik benutzt die vorliegende Erfindung mit Vorteil die ohnehin vorhandene Klemmvorrichtung, um in einer Freigabestellung der Klemmvorrichtung die Verschiebung der Stelleinheit gegenüber der Halteeinheit zu gestatten und in einer Fixierstellung die Stelleinheit gegenüber dem Halteteil festzusetzen, wobei gleichzeitig der Klemmabschnitt der Energieabsorptionsvorrichtung mit eingeklemmt und fixiert wird, so dass im Falle eines Fahrzeugcrashs bei einer relativen Verschiebung von Stelleinheit und Halteeinheit Energie durch die Energieabsorptionsvorrichtung absorbiert wird. Der Klemmabschnitt der Energieabsorptionsvorrichtung ist erfindungsgemäß in dem durch die Klemmvorrichtung erzeugten Kraftschluss, auch Reibschluss genannt, zwischen Stelleinheit und Halteeinheit eingekoppelt. In der Fixierstellung der Klemmvorrichtung ist der Klemmabschnitt reibschlüssig mit einem im Crash unverschiebbaren Bauteil der Lenksäule, beispielsweise der Halteeinheit, gekoppelt. Mit anderen Worten ist der Klemmabschnitt innerhalb des durch die Klemmvorrichtung in der Fixierstellung erzeugten Klemmkontaktes kraftschlüssig zumindest in Achsrichtung eingekoppelt.

Gemäß der Erfindung ist der Klemmabschnitt mit einem Langloch zum Durchgang eines Klemmbolzens der Klemmvorrichtung versehen. Dadurch kann der Klemmabschnitt und damit die gesamte Energieabsorptionsvorrichtung in der Freigabestellung der Klemmvorrichtung entlang des Langlochs verschoben werden und in der Fixierstellung mittels der über den Klemmbolzen wirkenden Klemmvorrichtung sicher fixiert werden.

Im Normalbetrieb des Kraftfahrzeugs ist die Lenksäule in der Fixierstellung und es ist kein Crashfall eingetreten. Mit anderem Worten entspricht der Normalbetrieb des Kraftfahrzeugs dem bestimmungsgemäßen Gebrauch des Kraftfahrzeugs, ohne das ein Fahrzeugfrontalaufprall, auch Crashfall genannt, eingetreten ist.

Im Fall eines Fahrzeugfrontalaufpralls, auch Fahrzeugcrash oder Crash genannt, wird durch den Fahrer über das Lenkrad kinetische Energie in die Lenksäule eingetragen, wodurch sich unter Energieabsorption durch die Energieabsorptionsvorrichtung die Stelleinheit gegenüber der Halteeinheit und dem Klemmabschnitt der Energieabsorptionsvorrichtung verlagert. Beim Energieabsorptionsvorgang im Crashfall befindet sich die Klemmvorrichtung in ihrer Fixierstellung.

Als Klemmvorrichtung können verschiedene Systeme zum Einsatz kommen, welche einen Klemmhub bereitstellen, um das gewünschte Festklemmen zu erreichen. Exemplarische sei zum eine Nockenklemmvorrichtung genannt. Derartige Nockenklemmvorrichtungen umfassen eine Nockenscheibe und eine Kulissenscheibe, wobei diese mittels eines Betätigungshebels zueinander verdreht werden können. Weiterhin kann als Klemmvorrichtung auch eine Kippstiftklemmvorrichtung oder eine Wälzkörperklemmvorrichtung verwendet werden.

Die Stelleinheit ist bevorzugt in einer Klammereinheit verschiebbar aufgenommen. Die Klammereinheit umschließt die Stelleinheit und umfasst einen Schlitz in Achsrichtung. Durch die Überführung der Klemmvorrichtung aus der Freigabestellung in die Fixierstellung wird die Stelleinheit durch die Verschmälerung des Schlitzes in der Klammereinheit festgeklemmt. In der Freigabestellung ist die Stelleinheit gegenüber der Halteeinheit verstellbar. Die Verstellung kann in Achsrichtung und/oder senkrecht zur Achsrichtung erfolgen. Die Verstellung senkrecht zur Achsrichtung dient zur Einstellung der Stelleinheit in Höhenrichtung.

In einer vorteilhaften Weiterbildung kann die Klammereinheit als ein äußeres Mantelrohr ausgebildet sein.

In einer bevorzugten Ausführungsform ist der Klemmabschnitt zwischen zwei im Crash relativ zueinander unbewegten Bauteilen festklemmbar. Der Klemmabschnitt ist somit zwischen einem ersten Bauteil und einem zweiten Bauteil mittels der Klemmvorrichtung festklemmbar, wobei die beiden Bauteile im Crash zueinander durch die Klemmvorrichtung fixiert sind. Mit anderen Worten findet im Crash zwischen dem ersten Bauteil, dem Klemmabschnitt und dem zweiten Bauteil keine Relativbewegung statt.

Bevorzugt kann das erste Bauteil durch die Halteeinheit gebildet sein, besonders bevorzugt durch eine Klemmbacke der Halteeinheit.

Das zweite Bauteil kann bevorzugt durch die Klammereinheit oder durch das äußere Mantelrohr gebildet sein. Alternativ kann das zweite Bauteil als eine Klemmplatte ausgebildet sein. Die Klemmplatte kann parallel zu der Klemmbacke der Halteeinheit angeordnet. Die Klemmvorrichtung wirkt mit der Klemmplatte so zusammen, dass diese mit geklemmt wird. Somit befindet sich die Klemmplatte mit im Kraftfluss der Klemmvorrichtung, so dass zwischen der Klemmplatte und der Klemmbacke der Halteeinheit der Klemmabschnitt eingeklemmt werden kann.

In der Fixierstellung ist der Klemmabschnitt zwischen dem ersten Bauteil und dem zweiten Bauteil eingeklemmt, so dass zwischen dem ersten Bauteil und dem Klemmabschnitt ein erster Reibschluss vorhanden ist. Dabei entspricht die Normalkraft der durch die Klemmvorrichtung eingetragenen Klemmkraft. Weiterhin ist zwischen dem zweiten Bauteil und dem Klemmabschnitt ein weiterer, zweiter Reibschluss vorhanden. Somit ist der Klemmabschnitt zwischen dem ersten und dem zweiten Bauteil durch zwei Reibschlüsse (Reibpaarungen) gehalten, d.h. fest eingeklemmt. Durch die zwei Reibschlüsse kann die gegen die Verschiebung des Klemmabschnitts wirkende Reibkraft, bei vorgegebener Klemmkraft, die als Normalkraft wirkt, im Vergleich zu einem System mit einem einzigen Reibschluss (Reibpaar) verdoppelt werden.

Die Stelleinheit hingegen ist nur über ein einziges Reibpaar und der daraus resultierenden Reibkraft in der Klammereinheit gehalten. Der Klemmabschnitt wird im Gegensatz dazu durch zwei Reibpaare, und somit durch eine doppelt so hohe Reibkraft zwischen dem ersten und zweiten Bauteil gehalten. Im Fall eines Crashs kommt es somit zur Überwindung der Haftreibung zwischen der Stelleinheit und der Klammereinheit, so dass sich die Stelleinheit gegenüber der Klammereinheit verlagert. Mit anderen Worten rutscht die Stelleinheit in der Klammereinheit durch. Der Klemmabschnitt ist im Gegensatz zur Stelleinheit durch zwei Reibpaare gehalten, so dass dieser sicher in seiner geklemmten Position verbleibt ohne durchzurutschen. Somit erfolgt eine Verschiebung der Stelleinheit gegenüber dem Klemmabschnitt der Energieabsorptionsvorrichtung. Der im Zentralbereich der Energieabsorptionsvorrichtung angeordnete Energieabsorber kann durch diese Verschiebung einen Teil der eingetragenen Energie absorbieren.

Selbst bei einem unrunden Querschnittsprofil der Stelleinheit kann die sichere Fixierung des Klemmabschnitts gewährleistet werden. Beispielsweise kommt es bei einem Achtkantprofil auf Grund von Winkelbeziehungen zu einer Verstärkung der Reibung im Vergleich zu kreiszylindrischen Stelleinheiten. Jedoch ist diese Verstärkung stets geringer als jene, die durch zwei Reibschlüsse bereitgestellt werden können. Somit kann sichergestellt werden, dass sich die Stelleinheit im Crash in Achsrichtung relativ zu dem Klemmabschnitt verlagert, ohne dass es zum Durchrutschen des Klemmabschnitts zwischen dem ersten und zweiten Bauteil kommt.

Durch zusätzliche Beschichtungen und/oder Gestaltungen der Klemmabschnitte kann diese Reibkraft zwischen den beiden Bauteilen und dem Klemmabschnitt noch weiter erhöht werden.

Mit anderen Worten ist die Reibkraft, mit der der Klemmabschnitt zwischen dem ersten und dem Zweiten Bauteil festgehalten ist, größer als die Reibkraft, mit der die Stelleinheit in der Klammereinheit gehalten ist. Die Differenz zwischen der maximalen Haftreibung, die den Klemmabschnitt fixiert, und der Reibung der Stelleinheit in der Klammereinheit ist der Betrag, der durch den Energieabsorber maximal zusätzlich absorbiert werden kann.

Eine Weiterbildung der Erfindung sieht vor, dass ein an der Halteeinheit abgestützter Nocken als Verdrehsicherung für den Klemmabschnitt durch dessen Langloch ragt. Der mit der Halteeinheit verbundene Nocken bleibt bei einer Verstellung der Lenksäule in der Freigabestellung der Klemmvorrichtung zusammen mit der Halteeinheit unverschiebbar an seinem Ort, während der Klemmabschnitt in Achsrichtung der Lenkspindel verschiebbar ist. Dabei bewegt sich der Klemmabschnitt mit seinem Langloch gegenüber dem Nocken und gleichzeitig dem Klemmbolzen. Da der Nocken und der Klemmbolzen im Abstand zueinander durch dasselbe Langloch ragen, legen sie eine Bewegungsrichtung des Langlochs fest, so dass der Klemmabschnitt und damit die gesamte Energieabsorptionsvorrichtung nicht verdrehbar sind.

Die Erfindung wird noch verbessert durch die Maßnahme, dass zwei Klemmabschnitte an gegenüberliegenden Seiten des Zentralabschnitts angeordnet sind und sich im Wesentlichen parallel zueinander erstrecken und zueinander beabstandet sind. Unter im Wesentlichen parallel wird eine Abweichung von bis zu ±10° von der exakten Parallelität verstanden. Während der Zentralabschnitt sich an der Oberseite der Stelleinheit quer über die Stelleinheit erstreckt, ragen die zwei Klemmabschnitte beide nach unten und erstrecken sich zumindest teilweise über die linke und rechte Seite der Stelleinheit, so dass sie zu beiden Seiten der Stelleinheit mit dieser zusammen mittels der Klemmvorrichtung zwischen zwei seitlichen Klemmbacken der Halteeinheit festklemmbar sind. Bevorzugt ist jeweils jeder Klemmabschnitt zwischen einer der Klemmbacken und der Klammereinheit eingeklemmt, so dass zwei weitere Reibpaare bereitgestellt sind. Mit anderen Worten ist jeder Klemmabschnitt durch je zwei Reibpaare fixiert, so dass die Energieabsorptionsvorrichtung durch vier Reibpaare an einer Verlagerung (Durchrutschen) während dem Crash gehindert ist. Aufgrund der symmetrischen Anordnung der beiden Klemmabschnitte kommt es im Crashfall zu einer im Wesentlichen symmetrischen Belastung der Energieabsorptionsvorrichtung, wodurch die Gefahr des Verbiegens oder sogar Abreißens der Klemmabschnitte vom Zentralabschnitt beseitigt wird.

In weiterer Ausgestaltung der Erfindung ist zumindest ein Klemmabschnitt mit einer Aufrauhung oder Riffelung oder Verzahnung oder einer Reihe von Durchbrüchen versehen. Diese Maßnahmen stellen sicher, dass die zum Herausziehen des Klemmabschnitts aus dem Klemmeingriff erforderliche Kraft im Verhältnis zur Klemmkraft der Klemmvorrichtung erhöht und damit die Funktionsicherheit erhöht wird. Mit anderen Worten wird die Reibpaarung dadurch verbessert, indem der Reibbeiwert vergrößert wird.

In bevorzugter Ausgestaltung der Erfindung ist der Energieabsorber als Biegelasche oder Reiss-Lasche oder Biege-Reiss-Lasche ausgestaltet, die vom Zentralabschnitt ausgeht und an ihrem freien Ende umgebogen ist, wobei das umgebogene Ende mit der Stelleinheit gekoppelt ist. Bei einer Biegelasche wird beim Verbiegen (Umformen) des Laschenmaterials Energie absorbiert. Die Verbiegung erfolgt dadurch, dass sich das gekoppelte Ende zusammen mit der Stelleinheit verlagert, wobei der Klemmabschnitt durch das Festklemmen und der dadurch bereitgestellten Reibung in seiner Position verbleibt. Durch die relative Bewegung zwischen dem umgebogenen Ende und des Klemmabschnitts erfolgt eine Deformation, wodurch ein Teil der eingetragenen Energie absorbiert wird, also in Verformungsarbeit und Wärme umgewandelt wird. Bei der Reiss-Lasche sind die Laschenränder noch mit dem umgebenden Material verbunden, so dass die Reiss-Lasche aus dem umgebenden Material herausgerissen werden muss, wobei Energie absorbiert wird. Die Biege-Reiss-Lasche kombiniert beide Energieabsorptionsmethoden der Biegelasche und der Reiss-Lasche. Alle drei Ausführungsformen sind einschließlich des abgebogenen Endes für die Verbindung mit der Stelleinheit mit geringstmöglichem Fertigungsaufwand und besonders kostengünstig herstellbar.

Eine andere Ausführungsform der Erfindung sieht vor, dass der Energieabsorber in Form eines in einem Schlitz verschiebbaren Gleitsteins ausgestaltet ist, dessen Breite größer ist als die Weite des Schlitzes, welcher daher bei einer Verschiebung gegenüber dem Gleitstein durch diesen aufgeweitet wird, wobei der Gleitstein mit der Stelleinheit verbunden ist und durch den Schlitz ragt, welcher im Zentralabschnitt der Energieabsorptionsvorrichtung angeordnet ist. In dieser Ausführungsform braucht der Zentralabschnitt der Energieabsorptionsvorrichtung lediglich mit einem passenden Schlitz versehen zu werden, was auf einfache Weise kostengünstig durch einen einzigen Stanzvorgang erfolgen kann. Der Gleitstein kann in Form eines einfachen Stifts ausgeführt sein, welcher in einer hierfür vorgesehenen Öffnung der Stelleinheit verankert werden kann. In einer kinematischen Umkehr kann es vorgesehen sein, dass im Zentralabschnitt ein Streifen ausgebildet ist, der zwischen zwei mit der Stelleinheit verbunden bolzenartigen Vorsprüngen angeordnet ist. Durch die Verlagerung der mit der Stelleinheit verbundenen Vorsprünge gegenüber dem Streifen wird dieser Streifen durch die Vorsprünge deformiert. Dabei weisen die Vorsprünge einen geringeren Abstand zueinander auf, als die Breite des Streifens. Mit anderen Worten zieht sich der Streifen durch die Vorsprünge hindurch.

In einer besonders einfach zu fertigenden und kostengünstigen Ausführungsform der Erfindung ist die Energieabsorptionsvorrichtung als Stanz-Biege-Blechteil ausgestaltet, vorzugsweise einstückig. Eine solche Ausführungsform kann aus einem Stück Blech mit wenigen Stanz- und Biegevorgängen hergestellt werden. Ganz besonders bevorzugt ist die Energieabsorptionsvorrichtung ein einziges integrales Stanz-Biege-Blechteil.

Um die Klemmwirkung der Klemmvorrichtung zu verbessern wird vorgeschlagen, dass die Klemmbacken der Halteeinheit aus zwei Lamellen besteht. Hierdurch wird die reibschlüssige Fixierung des Klemmabschnitts der Energieabsorptionsvorrichtung verbessert.

Die vorgenannte Maßnahme kann noch verbessert werden, wenn die Klemmflächen der Lamellen mit einer Aufrauhung oder einer reibungserhöhenden Beschichtung versehen sind. Dasselbe gilt auch für eine zwischen den Lamellen anzuordnende Reibscheibe. Alle diese Maßnahmen verbessern die Reibung zwischen den in der Freigabestellung der Klemmvorrichtung verschiebbaren Bauteile und den mit der Halteeinheit in Verbindung stehenden festen Bauteile, wenn die Klemmvorrichtung in Fixierstellung gebracht wird. Dies geschieht mittels eines Betätigungshebels, dessen Bedienkräfte für die Bedienperson als komfortabel empfunden werden sollen. Daher sind die Bedienkräfte des Hebels begrenzt und somit auch die Klemmkraft der Klemmvorrichtung. Die genannten Maßnahmen sorgen nun dafür, dass bei vorgegebener Klemmkraft der Klemmvorrichtung die zur Überwindung des Klemmgriffs erforderliche Ausreißkraft erhöht wird und somit die in der Freigabestellung verschieblichen Bauteile in der Fixierstellung fester und sicherer fixiert werden.

Ausführungsbeispiele der Erfindung werden nachfolgend anhand der Zeichnung näher erläutert. Die Figuren der Zeichnung zeigen im Einzelnen:
- Figur 1:: eine perspektivische Darstellung einer erfindungsgemäßen Lenksäule im vollständig ausgezogenen Zustand im Normalbetrieb mit einer Biege-Reiss-Lasche;
- Figur 2:: eine perspektivische Darstellung einer erfindungsgemäßen Lenksäule im vollständig zusammengeschobenen Zustand im Normalbetrieb;
- Figur 3:: Lenksäule gemäß Figuren 1 und 2 in einer teilweisen Explosionsdarstellung;
- Figur 4:: Lenksäule gemäß Figuren 1 und 2 in einem schematisierten Querschnitt;
- Figur 5:: Lenksäule gemäß Figur 1 in einem Längsschnitt vor einem Fahrzeug-Frontalaufprall;
- Figur 6:: Lenksäule gemäß Figur 5 in einem Längsschnitt nach einem Fahrzeug Frontalaufprall;
- Figur 7:: teilweise Explosionsdarstellung einer erfindungsgemäßen Lenksäule in einer zweiten Ausführungsform;
- Figur 8:: ein vergrößerter Ausschnitt aus Figur 7 mit einer Energieabsorptionsvorrichtung mit Biegelasche;
- Figur 9:: wie Figur 7 mit einer Energieabsorptionsvorrichtung mit Langloch und verschiebbarem Stift;
- Figur 10:: eine perspektivische Darstellung einer erfindungsgemäßen Lenksäule mit einer Verdrehsicherung für die Energieabsorptionsvorrichtung;
- Figur 11: eine erfindungsgemäße Lenksäule in einer alternativen Ausführungsform in einer teilweisen Explosionsdarstellung.

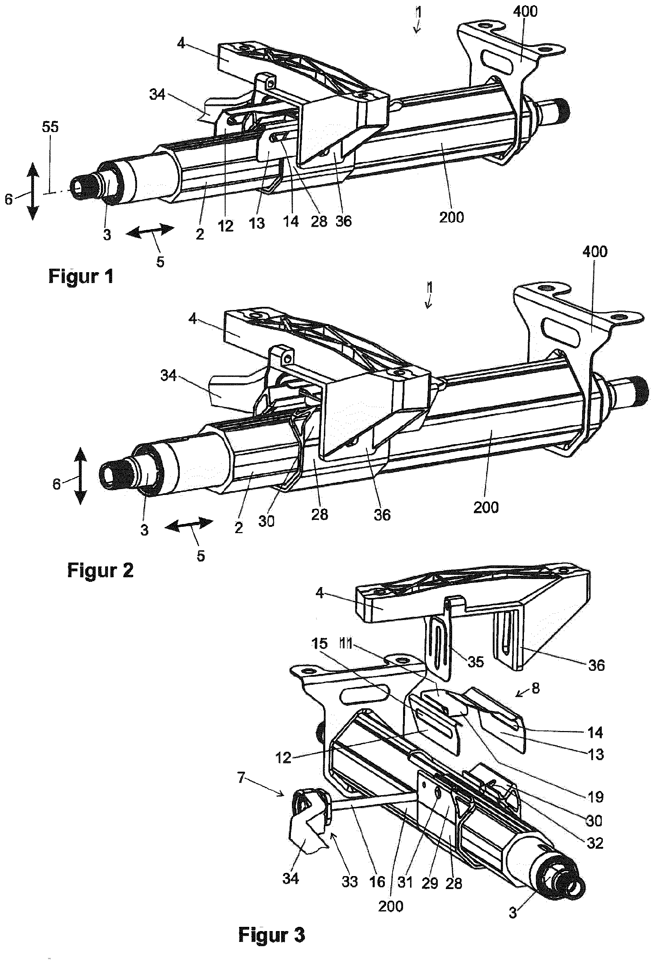

In den Figuren 1 bis 4 erkennt man den Aufbau der erfindungsgemäßen verstellbaren Lenksäule 1 für Kraftfahrzeuge. Eine Lenkspindel 3 ist in einer Stelleinheit 2 drehbar gelagert. Die Stelleinheit 2 ist gegenüber einer karosseriefesten Halteinheit 4 in Achsrichtung 5 der Lenkspindel 3 und im vorliegenden Fall auch in vertikaler Richtung 6 verstellbar. Die Stelleinheit 2 ist in Achsrichtung in einem äußeren Mantelrohr 200 verschiebbar aufgenommen, wobei das äußere Mantelrohr durch eine vordere Konsole 400 an einem nicht dargestellten Fahrzeug anbringbar ist. Bei einer Verstellung der Stelleinheit 2 in vertikaler Richtung 6 erfolgt eine elastische Verformung der vorderen Konsole 400, um die Verschwenkung zu ermöglichen. Alternativ kann auch eine Verschwenkachse zwischen der vorderen Konsole und des äußeren Mantelrohr 200 vorgesehen sein.

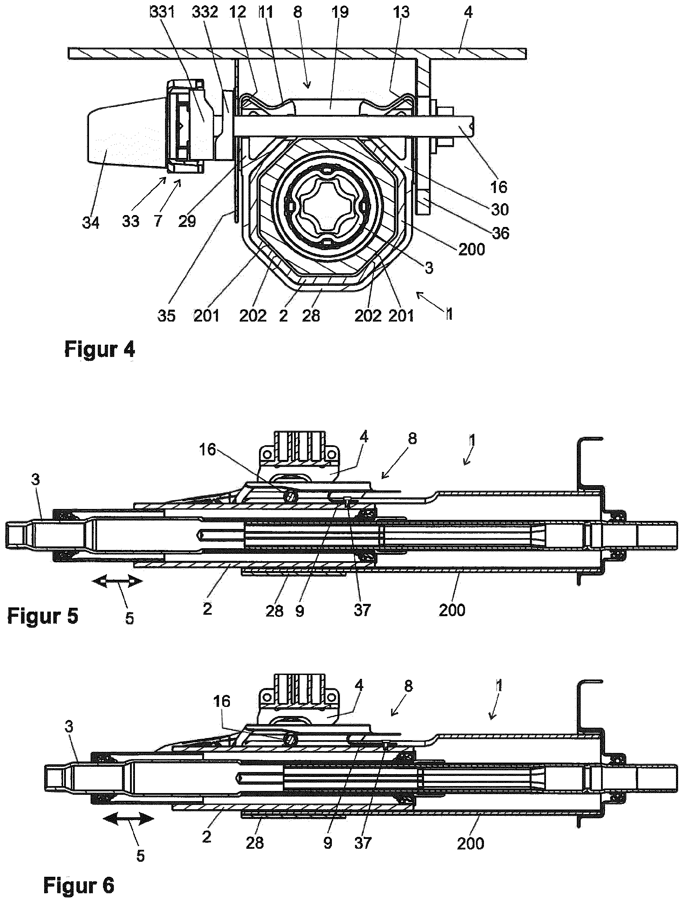

Die Stelleinheit 2 kann gegenüber der Halteinheit 4 mittels einer Klemmvorrichtung 7 fixiert werden. Die Klemmvorrichtung 7 besteht im Wesentlichen aus einer die Stelleinheit 2 umfassenden Klammereinheit 28, deren obere Enden 29, 30 einander gegenüber liegen und zwischen sich einen Schlitz freigelassen. Durch zwei Bohrungen 31, 32 der oberen Enden 29, 30 ist ein Klemmbolzen 16 geführt, der den zwischen den beiden oberen Enden 29, 30 gebildeten Schlitz überbrückt. Am einen Ende des Klemmbolzens 16 ist ein Zuspannmechanismus 33 angeordnet, der mittels eines Betätigungshebels 34 betätigbar ist. Der in der Figur 4 schematisch dargestellte Zuspannmechanismus 33 umfasst eine Nockenscheibe 331, die drehfest mit dem Betätigungshebel 34 verbunden ist, und eine Kulissenscheibe 332, die unverdrehbar in eine Öffnung einer Klemmbacke 35 eingreift. Durch eine Verdrehung des Betätigungshebels 34 verdreht sich die Nockenscheibe 331 gegenüber der Kulissenscheibe 332, wodurch ein Klemmhub in Richtung der Längsachse des Klemmbolzens bereitgestellt wird, durch den die Lenksäule in die Fixierstellung versetzt wird. Durch die Rückdrehung des Handhebels wird eine Überführung in die Freigabestellung erreicht. Bei Betätigung des Betätigungshebels 34 in eine Freigabestellung öffnet sich der Klemmgriff der Klammereinheit 23, so dass die Stelleinheit 2 sowohl in Achsrichtung 5 als auch in vertikaler Richtung 6 verschiebbar ist, um so die Stellung des auf dem freien Ende der Lenkspindel 3 sitzenden, hier nicht gezeigten Lenkrads zu verändern. Ist die gewünschte Stellung gefunden, so wird der Betätigungshebel 34 in Fixierstellung gebracht. Dadurch werden die oberen Enden 29, 30 der Klammereinheit 28 aufeinander zu bewegt, so dass sich der zwischen ihnen gebildete Schlitz verkleinert, d.h. der Schlitz verschmälert. Gleichzeitig werden die Außenseiten der Klammereinheit 28 zwischen zwei Klemmbacken 35, 34 eingeklemmt, die von der Halteeinheit 4 im Wesentlichen parallel zueinander nach unten ragen und die Stelleinheit 2 zusammen mit der Klammereinheit 28 zwischen sich einschließen.

Eine erfindungsgemäße Energieabsorptionsvorrichtung 8 besteht aus einem Stück Blech, welches aus einem einfachen Blechzuschnitt durch wenige Stanz- und Biegevorgänge hergestellt worden ist. Die Energieabsorptionsvorrichtung 8 hat im Wesentlichen einen Zentralabschnitt 11, der den zwischen den oberen Enden 29, 30 der Klammereinheit 28 gebildeten Spalt überbrückt, und zwei Klemmenabschnitte 12, 13, die vom Zentralabschnitt 11 ausgehend nach unten ragen und die Klammereinheit 28 umfassen. Die Klemmabschnitte 12, 13 sind jeweils mit einem Langloch 14, 15 versehen, welches in Achsrichtung 5 ausgerichtet ist. Die Klemmabschnitte 12, 13 ragen in den Bereich des Klemmbolzens 16 hinein, der durch die Langlöcher 14, 15 hindurch geht. Somit werden die Klemmabschnitte 12, 13 bei der Betätigung der Klemmvorrichtung 7 mittels des Betätigungshebels 34 in die Fixierstellung zwischen den Außenseiten der Klammereinheit 28 und den Innenseiten der Klemmbacken 35, 36 der Halteinheit 4 festgeklemmt. Somit bildet die Innenseite der Klemmbacke 35 mit der Außenfläche des Klemmabschnitts 12 ein erstes Reibpaar, also einen ersten Reibkontakt, aus. Die Außenseite des oberen Endes 29 der Klammereinheit 28 bildet mit der Innenfläche des Klemmabschnitts 12 ein zweites Reibpaar, also einen zweiten Reibkontakt, aus. Der Klemmabschnitt 13 weist ebenfalls jeweils einen Reibkontakt mit der Klemmbacke 36 und dem oberen Ende 30 auf. Durch jeden einzelnen Reibkontakt wird eine Reibkraft erzeugt, die der Verschiebung in Achsrichtung entgegen gerichtet ist. Die Reibkraft ergibt sich aus der vorhandenen Klemmkraft und dem zwischen den Reibflächen vorhandenen Reibbeiwert und der Anzahl der Reibpaarungen. Da jeder der zwei Klemmabschnitte zwei Reibpaarungen aufweist, kann somit die Reibkraft, welche einer Verschiebung der Klemmabschnitt 12, 13 gegenüber der Halteeinheit 4 und der Klammereinheit 28 entgegenwirkt, gegenüber einer einzelnen Reibpaarung vervierfacht werden. Die Stelleinheit 2 und das äußere Mantelrohr 200 weisen ein Achteck-/Achtkant- Querschnittsprofil auf, wodurch die Stelleinheit 2 und das äußere Mantelrohr 200 durch die Klammereinheit 28 über die Klemmflächen 201, 202 in Reibkontakt treten. Da die Klemmkraft in Richtung des Klemmbolzens 16 eingebracht wird, kann eine Verstärkung der wirkenden Reibkraft zwischen der Stelleinheit 2 und des äußeren Mantelrohrs 200 auf Grund der Winkelbeziehung gegenüber einer reinen kreiszylindrischen Kontaktfläche erreicht werden. Jedoch ist die wirkende Reibkraft zwischen der Stelleinheit 2 und des äußeren Mantelrohrs 200 geringer als die Reibkraft die die Klemmabschnitte 12, 13 in Achsrichtung 5 fixiert. Somit kann im Crashfall sichergestellt werden, dass die Stelleinheit 2 in das äußere Mantelrohr 200 trotz wirkender Reibung und Energieabsorption hineingleitet und die Klemmabschnitte 12, 13 in der geklemmten Position verbleiben, ohne zwischen der Klammereinheit 28 und den Klemmbacken der Halteeinheit 4 hindurch zu rutschen.

Bevorzugt tritt die Energieabsorption durch den Energieabsorber 9, 10 erst nach dem Losbrechen, d.h. nach dem Losgleiten der Stelleinheit 2 gegenüber dem äußeren Mantelrohr 200 ein. Dies bietet den Vorteil, dass bevor die zusätzliche Energieabsorption einsetzt, die Haftreibung zwischen der Stelleinheit 2 und dem äußeren Mantelrohr 200 überwunden werden kann.

Der Zentralabschnitt 11 der Energieabsorptionsvorrichtung 8 enthält einen Energieabsorber 9, 10. Bei der in den Figuren 3 bis 8 dargestellten Ausführungsform besteht der Energieabsorber aus einer Biege-Reiss-Lasche, deren freies Ende 19 abgebogen und mit der Oberseite der Stelleinheit 2 mittels einer Schraubverbindung 37 fest verbunden ist. Ebenfalls kann eine alternative Verbindung eingesetzt werden, beispielsweise eine Nietverbindung, Verstemmung oder eine Fügeverbindung wie Schweissen. Wenn sich die Klemmvorrichtung 7 in der Freigabestellung befindet, nimmt die Stelleinheit 2 bei der Verstellung der Lenksäule die mit ihr fest verbundene Energieabsorptionsvorrichtung 8 in jede Richtung mit, wobei die Verschiebung in Achsrichtung 5 durch die Langlöcher 14, 15 der Klemmabschnitte 12, 13 ermöglicht wird, so dass die Klemmabschnitte 12, 13 in Achsrichtung 5 an dem die Langlöcher 14, 15 durchdringenden Klemmbolzen 16 entlang gleiten können.

Im Normalbetrieb des Fahrzeugs ist die Klemmvorrichtung 7 in Fixierstellung, wobei die Stelleinheit 2 und die Energieabsorptionsvorrichtung 8 festgeklemmt sind. Treten nun infolge eines Fahrzeugcrashs Kräfte in Achsrichtung 5 auf, so kann sich das auf dem Ende der Lenkspindel 3 sitzende Lenkrad nach vorn verschieben, wobei die Stelleinheit 2 gegenüber der Klammereinheit 28 und der Halteeinheit 4 in Achsrichtung 5 geschoben wird und in das äußere Mantelrohr 200 hinein teleskopiert. Die Klemmabschnitt 12, 13 der Energieabsorptionsvorrichtung 8 hingegen bleiben fest im Klemmgriff zwischen der im Crash in Achsrichtung 5 unverschieblichen Klammereinheit 28 und der im Crash in Achsrichtung 5 unverschieblichen Halteeinheit 4 fixiert. Mit anderen Worten erfolgt im Crashfall zwischen der Halteeinheit 4, dem Klemmabschnitt 12, 13 und der Klammereinheit 28 keine Relativbewegung, d.h. sie sind zueinander unbewegt und verändern ihre örtliche Lage zueinander nicht. Deshalb zieht die Stelleinheit 2 über die Schraubverbindung 37 an der Biege-Reiss-Lasche 9, die sich dabei ständig verformt und in Achsrichtung 5 "abrollt". Damit wird die Bewegung der Lenksäule 3 in Achsrichtung 5 gebremst und gedämpft.

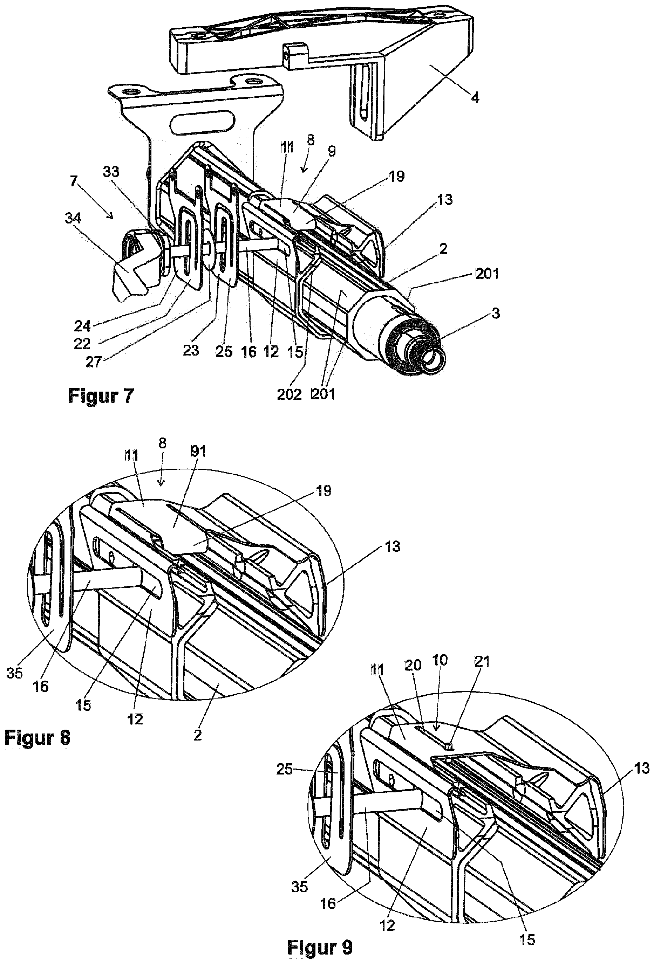

In der Figur 8 ist eine alternative Ausführungsform mit einer Biegelasche 91 anstatt einer Biege-Reiss-Lasche dargestellt. Alle anderen Bauteile weisen einen identischen Aufbau und eine identische Funktion wie die in den Figuren 1 bis 7 auf.

In einer anderen Ausführungsform der Erfindung ist der Energieabsorber 10 in Form eines in einem Schlitz 20 verschiebbaren Gleitsteins 21 ausgestaltet. Diese Ausführungsform ist in Figur 9 erkennbar. Dabei ist der Gleitstein 21 in Form eines Stiftes ausgestaltet und mit der Stelleinheit 2 fest verbunden. Der Schlitz 20 ist geringfügig schmaler als die Breite des Gleitsteins 21, so dass dieser nur unter erheblichem Kraft- und Energieaufwand durch den Schlitz 20 bewegt werden kann. Dabei wird der Schlitz 20 aufgeweitet und die durch die Verformung eingebrachte Energie absorbiert. Der Schlitz 20 ist im Zentralabschnitt 11 der Energieabsorptionsvorrichtung 8 ausgebildet. Wenn die Klemmvorrichtung 7 in Freigabestellung ist, kann die Stelleinheit 2 gegenüber der Halteeinheit 4 sowohl in Achsrichtung 5 als auch in vertikaler Richtung 6 verschoben werden, wobei die Energieabsorptionsvorrichtung 8 entlang ihrer Langlöcher 14, 15 auf dem Klemmbolzen 16 und der Klammereinheit 28 in Achsrichtung 5 gleiten kann.

Bringt man die Klemmvorrichtung 7 in Fixierstellung, so ist wiederum die Stelleinheit 2 zusammen mit dem äußeren Mantelrohr 200 der Klammereinheit 28 und der Energieabsorptionsvorrichtung 8 in der Klemmvorrichtung 7 festgeklemmt. Wenn nun infolge eines Fahrzeugcrashs extrem starke Kräfte in Achsrichtung 5 wirken, so verschiebt sich die Stelleinheit 2 innerhalb der Klammereinheit 28 und dem äußeren Mantelrohr 200 in Achsrichtung 5, während die Energieabsorptionsvorrichtung 8 an ihren Klemmabschnitten 12, 13 in der Klemmvorrichtung 7 festgeklemmt bleibt. Deshalb tritt jetzt eine Relativbewegung in Achsrichtung 5 zwischen der Stelleinheit 2 mit dem daran befestigten Gleitstein 21 und der Energieabsorptionsvorrichtung 8 auf, wobei der Gleitstein 21 durch den Schlitz 20 des Energieabsorbers 10 gezogen wird und dabei den Schlitz 20 aufweitet. Durch die beim Umformen des Schlitzes 20 absorbierte Energie wird die Bewegung der Stelleinheit 2 in Achsrichtung 5 gebremst bzw. gedämpft.

Wie man in Figur 7 erkennt, kann ein Klemmbacken 35 der Halteeinheit 4 zwei Lamellen 22, 23 aufweisen. Dies hat den Vorteil, dass eine verbesserte reibschlüssige Fixierung des Klemmabschnitts 12 der Energieabsorptionsvorrichtung 8 erreicht wird, da weitere Reibpaare zur Fixierung des Klemmabschnitts 12 bereitgestellt sind. Zur weiteren Verbesserung der Fixierung ist zwischen den Lamellen 22, 23 eine Reibscheibe 27 angeordnet.

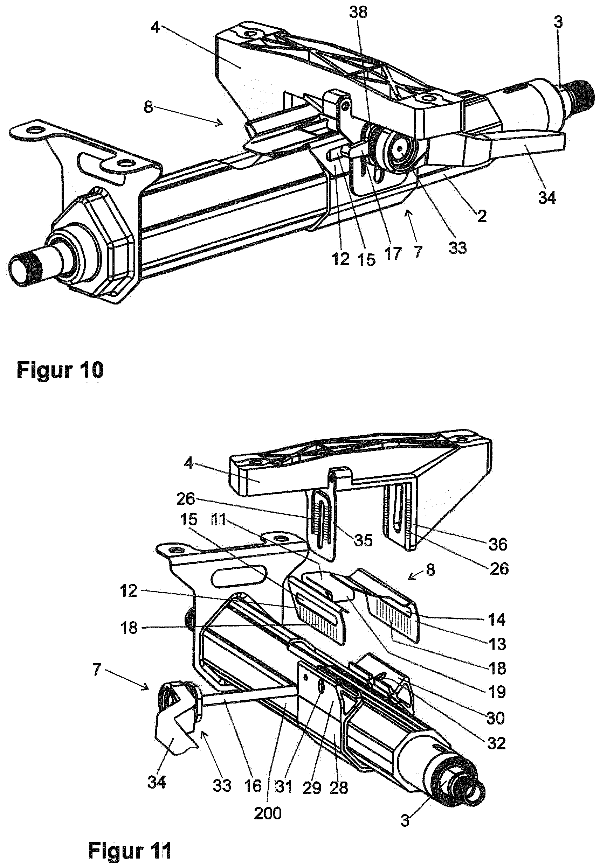

In der Figur 11 ist eine Lenksäule ähnlich der Figur 3 dargestellt, wobei die Klemmflächen der Klemmbacke 35, 36 und die Klemmflächen der Klemmabschnitte 12, 13 der Energieabsorptionsvorrichtung 8 mit einer reibungserhöhenden Beschichtung oder einer Aufrauhung 18, 26 versehen sein können, um den Reibbeiwert, auch als Reibkoeffizienten bezeichnet, zu erhöhen. Ebenfalls denkbar und möglich ist es, dass nur die Klemmflächen der Klemmbacke oder die Klemmfläche der Klemmabschnitt eine Aufrauhung 18, 26 aufweisen.

Aufgrund der insbesondere in den Figuren 3 und 7 bis 9 erkennbaren Formgebung ist die Energieabsorptionsvorrichtung 8 in Crashbelastungsrichtung, d.h. in Achsrichtung 5 besonders steif, und in Klemmrichtung, also in Richtung des Klemmbolzens 16 weich ausgeführt.

Der Energieabsorber 10 der Energieabsorptionsvorrichtung 8 kann wie beschrieben als Biegelasche, aber auch als Biege-Reiss-Lasche ausgeführt sein, wobei die Biege-Reiss.-Lasche lediglich durch materialschwächende Einprägungen im Blech der Energieabsorptionsvorrichtung 8 vorgegeben ist. Im Crashfall muss die Biege-Reiss-Lasche vom verbleibenden Blech der Energieabsorptionsvorrichtung 8 erst abgetrennt werden, wodurch Energie absorbiert wird. Weitere Energie wird durch die Verbiegung, also der plastischen Deformation, der Biege-Reiss-Lasche absorbiert.

Neben der näher beschriebenen alternativen Ausführungsform eines Energieabsorbers 10 in Form eines durch einen Schlitz 20 gezogenen Gleitsteins 21 oder Stifts kann ein erfindungsgemäßer Energieabsorber auch in weiteren alternativen Ausführungsformen verwendet werden, insbesondere in Form eines Reibelements oder durch einen spanabtrennenden Hobel.

Um ein Verdrehen der Energieabsorptionsvorrichtung 8 im Crashfall zu verhindern, kann optional ein Formschluss vorgesehen sein, bei dem die Energieabsorptionsvorrichtung 8 durch ein Gegenelement abgestützt wird. Hierfür können zum Beispiel die Langlöcher 14, 15 in den Klemmabschnitten 12, 13 der Energieabsorptionsvorrichtung 8 dienen, die ohnehin vorhanden sind. Als Gegenelement wird vorgeschlagen, im Bereich einer Kulissenscheibe 332 des Zuspannmechanismus 33 einen Nocken 17 vorzusehen, der in das Langloch 15 eingreift. Eine solche Vorrichtung ist in Figur 10 dargestellt.

### BEZUGSZEICHENLISTE

- 1: Lenksäule
- 2: Stelleinheit
- 3: Lenkspindel
- 4: Halteinheit
- 5: Achsrichtung
- 6: Vertikalrichtung
- 7: Klemmvorrichtung
- 8: Energieabsorptionsvorrichtung
- 9: Energieabsorber
- 10: Energieabsorber
- 11: Zentralabschnitt
- 12: Klemmabschnitt
- 13: Klemmabschnitt
- 14: Langloch
- 15: Langloch
- 16: Klemmbolzen
- 17: Nocken
- 18: Aufrauhung
- 19: freies Ende
- 20: Schlitz
- 21: Gleitstein / Stift
- 22: Lamelle
- 23: Lamelle
- 24: Klemmfläche
- 25: Klemmfläche
- 26: Aufrauhung
- 27: Reibscheibe
- 28: Klammereinheit
- 29: oberes Ende
- 30: oberes Ende
- 31: Bohrung
- 32: Bohrung
- 33: Zuspannmechanismus
- 34: Betätigungshebel
- 35: Klemmbacken
- 36: Klemmbacken
- 37: Schraubverbindung
- 38: Kulissenscheibe
- 55: Längsachse

## Patentansprüche

1. Verstellbare Lenksäule (1) für ein Kraftfahrzeug, mit einer Stelleinheit (2), in der eine Lenkspindel (3) drehbar gelagert ist, wobei die Stelleinheit (2) gegenüber einer karosseriefesten Halteeinheit (4) in Achsrichtung (5) der Lenkspindel (3) verstellbar und mittels einer Klemmvorrichtung (7) festklemmbar ist, so dass die Stelleinheit (2) im Normalbetrieb des Kraftfahrzeugs unverschieblich gegenüber der Halteeinheit (4) fixiert ist, und mit einer zwischen der Stelleinheit (2) und der Halteinheit (4) angeordneten Energieabsorptionsvorrichtung (8), wobei die Energieabsorptionsvorrichtung (8) einen Zentralabschnitt (11) aufweist, an dem mindestens ein Energieabsorber (9, 10) angeordnet ist, wobei der Energieabsorber (9, 10) mit der Stelleinheit (2) gekoppelt ist, und dass der Zentralabschnitt (11) mit mindestens einem Klemmabschnitt (12, 13) verbunden ist, der mittels der Klemmvorrichtung (7) festklemmbar ist, **dadurch gekennzeichnet, dass** der Klemmabschnitt (12,13) mit einem Langloch (14,15) zum Durchgang eines Klemmbolzens (16) der Klemmvorrichtung (7) versehen ist.

2. Lenksäule nach Anspruch 1, **dadurch gekennzeichnet, dass** ein an der Halteeinheit (4) abgestützter Nocken (17) als Verdrehsicherung für den Klemmabschnitt (12,13) durch dessen Langloch (14,15) ragt.

3. Lenksäule nach einem der vorhergehenden Ansprüche, **dadurch gekennzeichnet, dass** zwei Klemmabschnitte (12,13) an gegenüberliegenden Seiten des Zentralabschnitts (11) angeordnet sind und sich parallel zueinander erstrecken.

4. Lenksäule nach einem der vorhergehenden Ansprüche, **dadurch gekennzeichnet, dass** zumindest ein Klemmabschnitt (12,13) mit einer Aufrauhung (18) oder Riffelung versehen ist.

5. Lenksäule nach einem der vorhergehenden Ansprüche, **dadurch gekennzeichnet, dass** der Energieabsorber (9) als Biegelasche oder Reisslasche oder Biege-Reiss-Lasche ausgestaltet ist, die vom Zentralabschnitt (11) ausgeht und an ihrem freien Ende (11) umgebogen ist, wobei das umgebogene Ende (11) mit der Stelleinheit (2) gekoppelt ist.

6. Lenksäule nach einem der Ansprüche 1 bis 4, **dadurch gekennzeichnet, dass** der Energieabsorber (10) in Form eines in einem Schlitz (20) verschiebbaren Gleitsteins (21) ausgestaltet ist, dessen Breite größer ist als die Weite des Schlitzes (20), welcher bei einer Verschiebung gegenüber dem Gleitstein (21) durch diesen aufgeweitet wird, wobei der Gleitstein (21) mit der Stelleinheit (2) verbunden ist und durch den Schlitz (20) ragt, welcher im Zentralabschnitt (11) der Energieabsorptionsvorrichtung (8) angeordnet ist.

7. Lenksäule nach einem der vorhergehenden Ansprüche, **dadurch gekennzeichnet, dass** der Energieabsorber (9) als Stanz-Biege-Blechteil ausgestaltet ist.

8. Lenksäule nach einem der vorhergehenden Ansprüche, **dadurch gekennzeichnet, dass** ein Klemmbacken (35) der Halteeinheit (4) aus zwei Lamellen (22, 23) besteht.

9. Lenksäule nach Anspruch 8, **dadurch gekennzeichnet, dass** die Klemmflächen (24, 25) der Lamellen (22, 23) mit einer Aufrauhung (26) oder einer reibungserhöhenden Beschichtung versehen sind.

10. Lenksäule nach Anspruch 8 oder 9, **dadurch gekennzeichnet, dass** zwischen den Lamellen (22, 23) eine Reibscheibe (27) angeordnet ist.

## Claims

1. Adjustable steering column (1) for a motor vehicle, with an actuating unit (2), in which a steering spindle (3) is mounted rotatably, it being possible for the actuating unit (2) to be adjusted in the axial direction (5) of the steering spindle (3) with respect to a holding unit (4) which is fixed on the vehicle body, and it being possible for the said actuating unit (2) to be clamped fixedly by means of a clamping apparatus (7), with the result that the actuating unit (2) is fixed non-displaceably with respect to the holding unit (4) during normal operation of the motor vehicle, and with an energy absorption apparatus (8) which is arranged between the actuating unit (2) and the holding unit (4), the energy absorption apparatus (8) having a central section (11), on which at least one energy absorber (9, 10) is arranged, the energy absorber (9, 10) being coupled to the actuating unit (2), and the central section (11) being connected to at least one clamping section (12, 13) which can be clamped fixedly by means of the clamping apparatus (7), **characterized in that** the clamping section (12, 13) is provided with a slot (14, 15) for the passage of a clamping bolt (16) of the clamping apparatus (7).

2. Steering column according to Claim 1, **characterized in that** a cam (17) which is supported on the holding unit (4) protrudes, as an anti-rotation safeguard for the clamping section (12, 13), through the slot (14, 15) of the latter.

3. Steering column according to either of the preceding claims, **characterized in that** two clamping sections (12, 13) are arranged on opposite sides of the central section (11) and extend parallel to one another.

4. Steering column according to one of the preceding claims, **characterized in that** at least one clamping section (12, 13) is provided with a roughened portion (18) or grooving.

5. Steering column according to one of the preceding claims, **characterized in that** the energy absorber (9) is configured as a bending tab or tear-off tab or bending/tear-off tab which emanates from the central section (11) and is bent over at its free end (11), the bent-over end (11) being coupled to the actuating unit (2) .

6. Steering column according to one of Claims 1 to 4, **characterized in that** the energy absorber (10) is configured in the form of a sliding block (21) which can be displaced in a slit (20) and the width of which is greater than the width of the slit (20) which is widened by way of the sliding block (21) in the case of a displacement with respect to the said sliding block (21), the sliding block (21) being connected to the actuating unit (2) and protruding through the slit (20) which is arranged in the central section (11) of the energy absorption apparatus (8).

7. Steering column according to one of the preceding claims, **characterized in that** the energy absorber (9) is configured as a stamped and bent sheet metal part.

8. Steering column according to one of the preceding claims, **characterized in that** a clamping jaw (35) of the holding unit (4) consists of two ribs (22, 23).

9. Steering column according to Claim 8, **characterized in that** the clamping faces (24, 25) of the ribs (22, 23) are provided with a roughened portion (26) or a coating which increases friction.

10. Steering column according to Claim 8 or 9, **characterized in that** a friction disc (27) is arranged between the ribs (22, 23).

## Revendications

1. Colonne de direction réglable (1) pour un véhicule automobile, comprenant une unité de réglage (2) dans laquelle un arbre de direction (3) est monté en rotation, l'unité de réglage (2) étant réglable par rapport à une unité de maintien (4) fixée à la carrosserie dans la direction axiale (5) de l'arbre de direction (3) et pouvant être serrée au moyen d'un dispositif de serrage (7) de sorte que l'unité de réglage (2) est fixée de manière immobile par rapport à l'unité de maintien (4), et comprenant un dispositif d'absorption d'énergie (8) disposé entre l'unité de réglage (2) et l'unité de maintien (4), le dispositif d'absorption d'énergie (8) présentant une partie centrale (11) sur laquelle est disposé au moins un absorbeur d'énergie (9, 10), l'absorbeur d'énergie (9, 10) étant couplé à l'unité de réglage (2), et la partie centrale (11) étant reliée à au moins une partie de serrage (12, 13) pouvant être serrée au moyen du dispositif de serrage (7), **caractérisée en ce que** la partie de serrage (12, 13) est munie d'un trou oblong (14, 15) pour le passage d'un boulon de serrage (16) du dispositif de serrage (7).

2. Colonne de direction selon la revendication 1, **caractérisée en ce qu'**une came (17) prenant appui sur l'unité de maintien (4) fait saillie à travers le trou oblong (14, 15) de la partie de serrage (12, 13) en tant que dispositif anti-torsion de celle-ci.

3. Colonne de direction selon l'une quelconque des revendications précédentes, **caractérisée en ce que** deux parties de serrage (12, 13) sont disposées sur des faces opposées de la partie centrale (11) et s'étendent en parallèle l'une à l'autre.

4. Colonne de direction selon l'une quelconque des revendications précédentes, **caractérisée en ce qu'**au moins une partie de serrage (12, 13) est munie d'une rugosité (18) ou d'une cannelure.

5. Colonne de direction selon l'une quelconque des revendications précédentes, **caractérisée en ce que** l'absorbeur d'énergie (9) est configuré sous forme de patte flexible ou de patte de rupture ou de patte de rupture flexible qui part de la partie centrale (11) et est repliée au niveau de son extrémité libre (11), l'extrémité repliée (11) étant couplée à l'unité de réglage (2).

6. Colonne de direction selon l'une quelconque des revendications 1 à 4, **caractérisée en ce que** l'absorbeur d'énergie (10) est configuré sous la forme d'un coulisseau (21) pouvant être déplacé dans une fente (20) et dont la largeur est supérieure à l'ampleur de la fente (20) qui en cas de décalage par rapport au coulisseau (21) est élargie par celui-ci, le coulisseau (21) étant relié à l'unité de réglage (2) et faisant saillie à travers la fente (20) qui est disposée dans la partie centrale (11) du dispositif d'absorption d'énergie (8).

7. Colonne de direction selon l'une quelconque des revendications précédentes, **caractérisée en ce que** l'absorbeur d'énergie (9) est configuré sous la forme d'une pièce en tôle estampée pliée.

8. Colonne de direction selon l'une quelconque des revendications précédentes, **caractérisée en ce qu'**une mâchoire de serrage (35) de l'unité de maintien (4) est composée de deux lamelles (22, 23).

9. Colonne de direction selon la revendication 8, **caractérisée en ce que** les surfaces de serrage (24, 25) des lamelles (22, 23) sont munie d'une rugosité (26) ou d'un revêtement augmentant la friction.

10. Colonne de direction selon la revendication 8 ou 9, **caractérisée en ce qu'**une plaque de friction (27) est disposée entre les lamelles (22, 23).
